# EUROPÄISCHE PATENTANMELDUNG

(11) **EP 1 980 611 A2**
(43) Veröffentlichungstag der Anmeldung: **15.10.2008**
(21) Anmeldenummer: 08101919.2
(22) Anmeldetag: 25.02.2008

(54) **Verwendung von anionischen Silicontensiden zur Erzeugung von Schaum**

(30) Priorität: 10.04.2007 DE 102007016965
(71) Anmelder: Evonik Goldschmidt GmbH, 45127 Essen (DE)
(72) Erfinder: Kuppert, Dirk, 45657, Recklinghausen (DE); Brückner, Arndt, 45473, Mülheim a.d. Ruhr (DE); Venzmer, Joachim, 45239, Essen (DE)

(57) **Zusammenfassung**

Die Erfindung betrifft die Verwendung einer Zusammensetzung zur Erzeugung von wässrigem Schaum, enthaltend siliziumorganische Pfropfmischpolymere, welche dadurch gekennzeichnet ist, dass die Zusammensetzung siliziumorganischen Pfropfmischpolymere aufweist, die erhältlich sind durch ein Verfahren umfassend einen Hydrosilylierungsschritt a), bei dem ein Alkenylpolyether mit einem Wasserstoffsiloxan umgesetzt wird, und einen radikalischen Pfropfungsschritt b) in Gegenwart eines freie Radikale entwickelnden Mittels, bei dem mindestens ein ethylenisch ungesättigtes Monomere an eine, eine Polyethergruppe aufweisende Verbindung, gepfropft wird, wobei die Monomeren mindestens eine anionische Funktionalität enthalten, ausgewählt aus der Gruppe der Sulfonate und/oder Sulfate und/oder Phosphate und/oder Phosphonate, die Reihenfolge der Durchführung der beiden Verfahrensschritte beliebig ist und jeweils das Produkt der Reaktion des ersten Verfahrensschrittes als Edukt im nachfolgenden Schritt eingesetzt wird, zur Erzeugung von wässrigem Schaum, der an hydrophoben Flüssigkeiten angewendet werden kann. Insbesondere betrifft die Erfindung die Verwendung solcher Zusammensetzungen zur Erzeugung von Feuerlöschschaum.

## Beschreibung

Die Erfindung betrifft die Verwendung anionischer siliziumorganischer Pfropfmischpolymere, hergestellt durch ein Verfahren umfassend
a) eine Hydrosiliylierung eines Alkenylpolyethers mit einem Wasserstoffsiloxan und
b) einen radikalischen Pfropfungsschritt mit mindestens einem ethylenisch ungesättigten Monomeren, wobei die Monomeren mindestens eine anionische Funktionalität enthalten, ausgewählt aus der Gruppe der Sulfonate und/oder Sulfate und/oder Phosphate und/oder Phosphonate, wobei die Reihenfolge der beiden Verfahrensschritte auch umgekehrt sein kann, zur Erzeugung von wässrigem Schaum, der an hydrophoben Flüssigkeiten angewendet werden kann.

Weiterhin betrifft die Erfindung die Verwendung von schaumbildenden Zusammensetzungen die die Pfropfmischpolymere enthalten.

Wässrige Schäume sind für vielfältige Anwendungen geeignet, beispielsweise im Bereich der Kosmetik zur Erzeugung von Rasierschaum oder Haarpflegemitteln, im häuslichen oder industriellen Bereich zu Reinigungszwecken, zur Unterdrückung von Staubbildung, zur Papierherstellung, für Färbeprozesse, zur Fraktionierung oder Separation von Metallen oder deren Salze, zur Isolierung von Eisflächen, zur Beton- bzw. Zementherstellung, zum Schutz von Oberflächen, Bauten oder Vegetation vor Feuer und/oder Hitze, zur Feuerbekämpfung, darunter auch von Bränden in Minen, sowie zum Frostschutz von Pflanzen. Zur näheren Erläuterung einiger dieser Anwendungen sei auf A. R. Aidun, C. S. Grove Jr., D. N. Meldrum, Novel Uses of Aqueous Foams, Chem. Eng. 1964, 71, 145-148 verwiesen. Darüber hinaus besteht ein Bedarf an Schäumen für Anwendungen, bei denen der Schaum mit nichtwässrigen Flüssigkeiten in Kontakt kommt, wie beispielsweise organischen Lösemitteln oder petrochemischen Brenn- und Treibstoffen und bei denen der Schaum über eine ausreichende Stabilität und Fließfähigkeit verfügen muss. Zu diesen Anwendungen zählt unter anderem die Reinigung von Anlagen wie Tanklagern, Rohren, Pipelines oder Kesseln, die Verringerung von Verdampfungsverlusten flüchtiger Kohlenwasserstoffe oder anderer organischer Lösemittel, oder die Feuerbekämpfung. So ist es bekannt, Brände, insbesondere von Brenn- und Treibstoffen, durch Aufgeben zusammenhängender Schaumdecken zu bekämpfen. Solche Schaumdecken eignen sich auch zur Verhinderung des Entstehens von Bränden. Zur Erzeugung dieser Schäume werden üblicherweise Schaummittel verwendet, die einen wasserhaltigen Film zwischen Schaum und brennbarer Flüssigkeit bilden ("Aqueous Film Forming Foam" - AFFF oder A3F). Dieser Film sorgt für die rasche Ausbreitung des Schaums und für eine dampfdichte Barriere und verhindert damit die Wiederentzündung. Als wesentlichen Bestandteil enthalten AFFFs Tenside mit perfluorierten Gruppen. Derartige Schaummittelzusammensetzungen sind beispielsweise in den Schriften DE-1 216 116, EP-A-0 595 772, US-4,420,434, DE-2 357 281 beschrieben.

In der DE-2 240 263 werden schaumbildende Stoffzusammensetzungen beansprucht, die aus
a) einem Schäummittel, das beispielsweise ein langkettiges Polysiloxan mit angebundenen Sulfatgruppen sein kann,
b) einer S- oder O-(Niederalkyl)-substituierten Oxisäure des Schwefels oder ein Salz derselben sowie unbedingt
c) einem oberflächenaktiven Mittel aus Fluorkohlenstoff, besteht.

Die DE-1 812 531 offenbart, dass wasserlösliche Polysiloxane, insbesondere organofunktionelle Sulfate von Polyethersiloxanen, als Solubilisierungsmittel für organische Fluorverbindungen zur Erzeugung wässriger Feuerlöschschaumkonzentrate eingesetzt werden können.

In den Schriften US-4,038,195, US-3,957,657 und US-3,957,658 werden Löschschaummischungen offenbart, die sulfonat- bzw. sulfatgruppenhaltige Silicontenside enthalten und die Anwesenheit von Tensiden mit perfluorierten Gruppen erfordern. Die Mischungen aus Tensiden mit perfluorierten Gruppen und Silicontensid sind selbst nicht ausreichend schäumend und müssen daher durch den Zusatz von Tensiden, die weder perfluorierte Gruppen noch Siliziumatome enthalten, in ihrer Verschäumbarkeit verbessert werden.

Die Schriftenfamilie DE-A-28 26 224, WO-A-80/01883, US-4,464,267, US-4,387,032, US-4,060,489, US-4,149,599 und US-4,060,132 lehrt Feuerlöschschaummittel für brennende hydrophile Flüssigkeiten, die ein Polysaccharid und gegebenenfalls Silicone und/oder Fluorkohlenwasserstoffe enthalten. Die Fluorkohlenwasserstoffe können gegebenenfalls auch weggelassen werden, doch deren Anwesenheit macht die Formulierung nach Verdünnung und Verschäumen erst zu wirksamen Feuerlöschern auf hydrophoben Flüssigkeiten wie Benzin. Die oberflächenaktiven Silicone oder die Fluorkohlenwasserstoffe dienen dort zur Erzeugung eines wässrigen Filmes, schäumen aber selbst nicht in ausreichendem Maße. Noch weitere oberflächenaktive Substanzen, die weder Fluorkohlenwasserstoffe noch Silicone sind, sind nötig, um den Mitteln die gewünschte Schäumbarkeit zu verleihen.

Im Rahmen zunehmenden Umweltbewusstseins sind Verbindungen mit perfluorierten Gruppen aufgrund ihrer extrem geringen biologischen Abbaubarkeit und mitunter hohen Verweilzeit in Organismen in den letzten Jahren jedoch zunehmend in die Kritik geraten (M. Fricke, U. Lahl, Risikobewertung von Perfluortensiden als Beitrag zur aktuellen Diskussion zum REACH-Dossier der EU-Kommission, UWSF - Z. Umweltchem. Ökotox. 2005, 17, 36-49). Im Jahre 2005 schlug das Land Schweden im Rahmen der "Stockholm Convention on Persistent Organic Pollutants" einen weltweiten Bann für Perfluoroctansulfonate (PFOS) vor - gebräuchlichen Inhalts- und Ausgangsstoffen für AFFF. Der Fachmann kann erwarten, dass die Verwendung von Tensiden mit perfluorierten Gruppen aus Umwelt- und Gesundheitsschutzgründen künftig eingeschränkt wird, und diese, auch wenn ihre Verwendung für Löschanwendungen ausnahmsweise gestattet bleiben sollte, aufgrund des verringerten Produktionsvolumens nur zu steigenden Preisen zur Verfügung stehen werden.

Es besteht daher ein Bedarf an Schaummitteln, die für die Bekämpfung von Lösemittel-, Treib- und Brennstoffbränden geeignet sind und die ohne oder zumindest mit einem deutlich verringerten Anteil an Tensiden, die perfluorierte Gruppen besitzen, auskommen.

Es ist Stand der Technik, dass siliziumorganische Verbindungen mit Sulfat- oder Sulfonatgruppen wässrige Schäume bilden können.

In der Offenlegungsschrift DE-1 668 759 werden oberflächenaktive Mittel auf Basis von Organosilizium-verbindungen, die Sulfonatgruppen enthalten, und deren Verwendung als schäumendes Mittel beschrieben. Die Einführung der Sulfonatgruppe erfolgt dabei durch Umsetzung eines an das Siloxangerüst gebundenen Epoxidrestes mit Natriumsulfit. Die Stabilität der entstehenden Schäume auf hydrophoben Flüssigkeiten wird nicht offenbart. Im Gegenteil wird die Fähigkeit der Organosiliziumverbindungen als hervorragende Emulgatoren für Mischungen von hydrophoben, organischen Lösemitteln und Wasser beschrieben. Ein solches Verhalten ist für den Einsatz der Tenside zur Erzeugung von auf hydrophoben Flüssigkeiten stabilen Schäumen nicht erwünscht.

DE-1 157 789 beansprucht ein Verfahren zur Herstellung von Organosiliziumverbindungen, die eine Si-Y-OSO₃⁻-Gruppierung aufweisen, wobei Y einen beliebigen zweiwertigen, gegebenenfalls halogenierten Kohlenwasserstoffrest bedeutet, dadurch gekennzeichnet, dass man Organosiliziumverbindungen, die eine Gruppierung Si-Y-O-X tragen (X = Wasserstoff oder Acylrest) mit Schwefelsäure oder Schwefeltrioxid, Chlorsulfonsäure oder Amidoschwefelsäure bei Temperaturen bis zu 180 °C umsetzt. Die Si-Y-O-X-Gruppierung wird dabei vollständig zu einer Si-Y-O-SO₃⁻-Einheit umgesetzt. Schäumende Eigenschaften wässriger Lösungen der in DE-1 157 789 offenbarten siliziumorganischen Verbindungen werden nicht erwähnt.

DE-C-41 41 046 offenbart die Herstellung von Polysiloxanen mit mindestens einer Si-C-gebunden Sulfatohexylgruppe, wobei die Sulfatohexylgruppe durch Sulfatierung der Hydroxygruppe einer Hydroxhexyleinheit mit Amidoschwefelsäure in organischen Lösemittel wie Dimethylformamid oder N-Methylpyrrolidon hergestellt wird. Dabei wird pro Hydroxyalkylrest exakt eine Sulfatgruppe am Ende des Hexylrestes eingeführt. Folglich bleibt die Anwendung dieser Methode auf Polysiloxane beschränkt, die organische Reste mit freien Hydroxylgruppen enthalten.

Die Patentschrift US-4,960,845 offenbart kammartige Polyethersiloxane, mit sulfatierten Polyetherseitenketten hergestellt durch Sulfatierung der endständigen Hydroxylgruppen mit Chlorsulfonsäure oder Amidoschwefelsäure. Durch dieses Verfahren werden Polyethersiloxane dargestellt, bei denen maximal eine Sulfatgruppe, d.h. ein Schwefelsäureester, am Ende der entsprechenden Polyetherreste entsteht. Wässrige Lösungen dieser Verbindungen besitzen schaumerzeugende, tensidische Eigenschaften. Die Verwendung solcher Verbindungen zum Erzeugen von Löschschäumen wird in der US-4,960,845 nicht offenbart.

US-B-6,777,521 beansprucht Siliconsulfate, hergestellt indem Polyethersiloxane mit mindestens einem Propylglycidylrest in wässriger Lösung oder in wässriger Emulsion mit anorganischen Sulfatsalzen, wie zum Beispiel Natriumsulfat umgesetzt werden. Die so erhaltenen Polyethersiloxane enthalten neben freien Hydroxylgruppen auch endständige Sulfatgruppen. Dabei entstehen Polyethersiloxane, die pro Propylglycidylrest eine einzige Sulfatgruppe endständig aufweisen. Die Sulfatgruppe ist am Ende des Polyetherseitenrestes lokalisiert. Die so hergestellten Verbindungen finden Verwendung in Polyurethanschäumen und in kosmetischen Formulierungen. Die Verwendung als Tenside zum Erzeugen von Feuerlöschschäumen wird in US-B-6,777,521 nicht erwähnt.

In US-5,705,665 wird die Herstellung von sulfatierten Siliconpolyethern durch die Hydrosilylierung von Verbindungen der Formel CH₂=C (R^{a}) -CH₂- (OR^{b}) m- (R^{c}) p-SO₃A, wobei R^{b} eine Alkylengruppe ist mit mindesten zwei Kohlenstoffatomen, R^{c} ist ein Sauerstoffatom oder eine divalente Kohlenwasserstoffgruppe enthaltend ein Sauerstoffatom, R^{a} ist ein Wasserstoffatom oder eine Methylgruppe, A ist ein Alkalimetallion, m ist eine Zahl zwischen 1 und 3, m = 3 bis 60, p = 0 oder 1 mit SiH-Siloxanen beschrieben. Kennzeichnend ist, dass die Sulfonatgruppe über Hydrosilylierung eines schon endständig mit einer Sulfonatgruppe modifizierten Polyethers eingeführt wird.

In DE-1 768 252 werden sulfonierte Polyethersiloxane durch Hydrosilylierungen von SiH-Siloxanen mit Alkenylpolyethern, die am anderen Ende mit eine Sulfonsäuregruppe modifiziert sind, hergestellt. Die Herstellung der sulfonierten Alkenylpolyether der allgemeinen Formel M[O₃SCₐH₂ₐO(C_{b}H_{2b}O)_{c}(CH₂)ₓC(R)=CH₂]_{d}, wobei M ein ein-, zwei-, drei- oder vierwertiges Kation, R Wasserstoff oder eine Alkylgruppe mit 1 bis 18 Kohlenstoffatomen, a 2, 3 oder 4, b 2, 3, oder 4, c eine ganze Zahl von 1 bis 100 und x 0 oder 1, d eine ganze Zahl von 1 bis 4 und d gleich der Wertigkeit von M ist, erfolgt dabei durch die Umsetzung von Alkenylpolyethern der Formel HO(C_{b}H_{2b}O)_{c}(CH₂)ₓC(R)=CH₂, die eine freie endständige Hydroxylgruppe enthalten, mit z. B. Propansulton. Die Hydrosilylierungen werden nach für den Fachmann bekannten Methoden durchgeführt. Die Schrift erwähnt die Anwendung solcher Silicontenside als Schaummittel. Die DE-1 768 252 macht keine Aussage über die Stabilität der Schäume auf hydrophoben Flüssigkeiten.

Die Schriften US-5,091,493, US-5,070,171 und US-5,093,452 offenbaren Polyethersiloxane, die Phosphatgruppen enthalten. Die Siliconphosphate werden dabei durch die Umsetzung von Siliconen, welche freie Hydroxylgruppen enthalten, mit Polyphosphorsäure oder mit Phosphorpentoxid erzeugt. Dabei entstehen neben dem Monophosphorsäureester auch Di- und Triester. Die Phosphatgruppen sind dabei an das Ende einer Polyetherkette gebunden. In den Schriften US-5 091 493, US-5,070,171 und US-5,093,452 werden weder Aussagen über die Eignung der modifizierten Polyethersiloxane zur Erzeugung von Feuerlöschschäumen, noch zur Stabilität wässriger Schäume auf hydrophoben Flüssigkeiten gemacht.

Die im Stand der Technik offenbarten Methoden zur Herstellung von sulfatierten oder sulfonierten oder phosphatierten Polyethersiloxanen benötigen die Anwesenheit von freien Hydroxylgruppen oder reaktionsfähigen Resten, wie z. B. Epoxidgruppen und die Umsetzung mit aggressiven Chemikalien wie z. B. Chlorsulfonsäure oder Phosphorpentoxid. Der Einsatz von Schwefelsäure, Chlorsulfonsäure, Amidoschwefelsäure oder im Falle der Phosphatierungen von Phosphorpentoxid ist technisch jedoch nicht erwünscht, da dabei Reaktionsbedingungen angewandt werden müssen, die zu stark verfärbten bis hinzu zu schwarz gefärbten Produkten mit einem schlechten Geruch kommen. Weiterhin lassen sich die Nebenprodukte schlecht abtrennen. Erwünscht sind Methoden, bei denen mildere Reaktionsbedingungen zum Einsatz kommen.

Der vorliegenden Erfindung liegt deshalb die Aufgabe zugrunde, Silicontenside bereitzustellen, die einen oder mehrere Nachteile des Standes der Technik nicht aufweisen. Besonders bevorzugt sollen die aus den wässrigen Lösungen, die die erfindungsgemäßen Silicontenside enthalten, erhaltene Schäume ohne die Zugabe oder zumindest mit verminderter Zugabe von Verbindungen mit perfluorierten Gruppen über eine hohe Stabilität auf hydrophoben Flüssigkeiten verfügen. Die alternativen Silicontenside sollten vorzugsweise auch einfach und kostengünstig herzustellen sein.

Überraschenderweise wurde gefunden, dass die erfinderische Aufgabe durch Verwendung von Sulfonatgruppen und/oder Sulfatgruppen und/oder Phosphatgruppen und/oder Phosphonatgruppen enthaltender siliziumorganischer Pfropfmischpolymere als Silicontenside, hergestellt nach einem Verfahren umfassend
a) eine Hydrosiliylierung eines Alkenylpolyethers mit einem Wasserstoffsiloxan und
b) einen radikalischen Pfropfungsschritt einer mindestens eine Polyethergruppe aufweisenden Verbindung mit mindestens einem ethylenisch ungesättigten Monomeren, wobei die Monomeren mindestens eine anionische Funktionalität, ausgewählt aus der Gruppe der Sulfonate und/oder Sulfate und/oder Phosphate und/oder Phosphonate, enthalten, wobei die Reihenfolge der beiden Verfahrensschritte auch umgekehrt sein kann, gelöst werden kann.

Aus dem Stand der Technik ließ sich weder ein gutes Schaumverhalten dieser Silicontenside noch die Eignung als Schaummittel zur Feuerbekämpfung, insbesondere von Brenn- und Treibstoffbränden, ohne den Zusatz von Tensiden mit perflourierten Gruppen (im Folgenden mit PFT abgekürzt) entnehmen oder ableiten. Die Eignung als Löschschaum ist für den Fachmann vor allem insofern völlig unerwartet, als dass nach dem Stand der Technik für Löschschaumanwendungen eingesetzte Sulfonatgruppen enthaltende siliziumorganische Verbindungen stets die Anwesenheit von Tensiden mit perfluorierten Gruppen zur Erzeugung an hydrophoben Flüssigkeiten anwendbaren Schäumen hoher Stabilität erfordern.

Gegenstand der vorliegenden Erfindung sind deshalb Zusammensetzungen zur Erzeugung von wässrigem Schaum enthaltend siliziumorganische Pfropfmischpolymere, dadurch gekennzeichnet, dass die Zusammensetzungen siliziumorganische Pfropfmischpolymere aufweisen, die erhältlich sind durch ein Verfahren umfassend einen Hydrosilylierungsschritt
a) bei dem ein Alkenylpolyether mit einem Wasserstoffsiloxan umgesetzt wird, und einen radikalischen Pfropfungsschritt
b) in Gegenwart eines freie Radikale entwickelnden Mittels, bei dem mindestens ein ethylenisch ungesättigtes Monomer an eine, eine Polyethergruppe aufweisende Verbindung, gepfropft wird, wobei die Monomeren mindestens eine anionische Funktionalität enthalten, ausgewählt aus der Gruppe der Sulfonate und/oder Sulfate und/oder Phosphate und/oder Phosphonate, die Reihenfolge der Durchführung der beiden Verfahrensschritte beliebig ist und jeweils das Produkt der Reaktion des ersten Verfahrensschrittes als Edukt im nachfolgenden Schritt eingesetzt wird.

Ebenso ist Gegenstand der vorliegenden Erfindung Verwendung einer erfindungsgemäßen Zusammensetzung bzw. der siliziumorganischen Pfropfmischpolymere zur Erzeugung von wässrigem Schaum.

Die erfindungsgemäßen Zusammensetzungen haben den Vorteil, dass der aus ihnen erhaltene Schaum auch auf hydrophoben und gegebenenfalls brennbaren Materialen, insbesondere Flüssigkeiten, hinreichend stabil ist und damit auf solchen Materialien angewendet werden kann. Dadurch eignen sich die aus den erfindungsgemäßen Zusammensetzungen erhaltenen wässrigen Schäume hervorragend als Feuerlöschschäume, Abdeckschäume oder Reinigungsschäume, insbesondere für den Einsatz in Gegenwart von hydrophoben Materialien, insbesondere hydrophoben Flüssigkeiten.

Die Stabilität des aus den erfindungsgemäßen Zusammensetzungen hergestellten Schaumes ohne die Zugabe von Tensiden mit perfluorierten Gruppen hat den Vorteil, dass beim Einsatz der erfindungsgemäßen Zusammensetzung zur Erzeugung von Schaum keine fluororganischen Verbindungen in die Umwelt gelangen.

Die erfindungsgemäßen Zusammensetzungen und ein Verfahren zu ihrer Herstellung sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die erfindungsgemäße, siliziumorganische Pfropfmischpolymere enthaltende Zusammensetzung zur Erzeugung von wässrigem Schaum zeichnet sich dadurch aus, dass die Zusammensetzung siliziumorganische Pfropfmischpolymere aufweist, die erhältlich sind durch ein Verfahren umfassend einen Hydrosilylierungsschritt
a) bei dem ein Alkenylpolyether mit einem Wasserstoffsiloxan umgesetzt wird, und einen radikalischen Pfropfungsschritt
b) in Gegenwart eines freie Radikale entwickelnden Mittels, bei dem ein ethylenisch ungesättigtes Monomeren an eine, eine Polyethergruppe aufweisende Verbindung, gepfropft wird, wobei die Monomeren mindestens eine anionische Funktionalität enthalten, ausgewählt aus der Gruppe der Sulfonate und/oder Sulfate und/oder Phosphate und/oder Phosphonate, die Reihenfolge der Durchführung der beiden Verfahrensschritte beliebig ist und jeweils das Produkt der Reaktion des ersten Verfahrensschrittes als Edukt im nachfolgenden Schritt eingesetzt wird.

Die vorliegende Erfindung basiert somit auf siliziumorganische Pfropfmischpolymere, die durch ein Verfahren zur Herstellung von siliziumorganischen Pfropfmischpolymere umfassend einen Hydrosilylierungsschritt
a) bei dem ein Alkenylpolyether mit einem Wasserstoffsiloxan umgesetzt wird, und einen radikalischen Pfropfungsschritt
b) bei dem ein ethylenisch ungesättigtes Monomeren an eine, eine Polyethergruppe aufweisende Verbindung, gepfropft wird, wobei die Monomeren mindestens eine anionische Funktionalität enthalten, ausgewählt aus der Gruppe der Sulfonate und/oder Sulfate und/oder Phosphate und/oder Phosphonate, wobei die Reihenfolge der Durchführung der beiden Verfahrensschritte beliebig ist und jeweils das Produkt des ersten Verfahrensschrittes als Edukt im nachfolgenden Schritt eingesetzt wird, erhalten werden können.

Als ethylenisch ungesättigte Monomere können jegliche ethylenisch ungesättigten Verbindungen z. B. auch polymere Olefine mit mindestens einem Rest an Ungesättigtkeit (wie beispielsweise Polymere des Butadiens oder Isoprens), oder jegliche Art von Makromonomeren, einschließlich solcher, die Siloxanketten enthalten sein können, die mindestens eine Sulfonat- und/oder Sulfat und/oder Phosphatgruppe und/oder Phosphonatgruppe enthalten, im Pfropfungsschritt b) eingesetzt werden.

Der Begriff ethylenisch ungesättigt bedeutet, dass die Monomeren zumindest eine polymerisierbare Kohlenstoff-Kohlenstoff Doppelbindung aufweisen, die mono-, di-, tri-, oder tetrasubstituiert sein kann.

Vorzugsweise werden im Pfropfungsschritt b) ethylenisch ungesättigte Monomere gemäß Formel (I) eingesetzt:

R³CH=CR⁴C(O)-E(R⁵)ₓ-F-X⁽ⁿ⁻⁾ (¹/_{w} M^{w+})ₙ (I)

mit
- R³: und R⁴ unabhängig voneinander ausgewählt aus der Gruppe bestehend aus -H, substituierte oder unsubstituierte, vorzugsweise unsubstituierte linear- oder verzweigtkettige Alkylreste mit 1 bis 8 Kohlenstoffatomen, Methoxy-, Ethoxy-, 2-Hydroxyethoxy- und 2-Ethoxyethyl,
- R⁵: unabhängig voneinander H oder Alkyl mit 1 bis 8 C-Atomen, bevorzugt Methyl,
- E: Stickstoff für x 1 oder Sauerstoff für x 0,
- F: eine zweiwertige Gruppe ist, ausgewählt aus linearen oder verzweigten, gesättigten, ein- oder mehrfach ungesättigten Alkyl-, Aryl-, Alkylaryl- oder Arylalkylgruppen, gegebenenfalls ein oder mehrere Heteroatome enthaltend, gegebenenfalls ein oder mehrere Carbonylgruppen enthaltend,
- X: SO₃, OSO₃ und n = 1 oder PO₃, OPO₃ und n = 2,
- M^{w+}: ein w-wertiges Kation mit w 1, 2, 3 oder 4, insbesondere H⁺, K⁺, Na⁺, NH₄⁺, (iC₃H₇)NH₃⁺, (CH₃)₄N⁺ oder (CH₃)₂N⁺R⁶R⁷, wobei R⁶ und R⁷ gleiche oder verschiedene Alkylreste sind, oder eine Mischung derselben, besonders bevorzugt K⁺ oder Na⁺, ist.

Die Herstellung von Monomeren nach Formel (I) mit X OSO₃ wird z. B. in DE-A-37 17 439 beschrieben. Die Herstellung von Monomeren gemäß Formel (I) mit X = SO₃ wird z. B. in den DE-2 104 020 und GB-1 299 155 beschrieben. Monomeren mit X = PO₃ und OPO₃ werden z. B. von Zeuner F. et al. in Phosphorus, Sulfur and Silicon and the Related Elements (1999), Seiten 144-146 und Seiten 133-136 und in der DE-A-199 18 974 beschrieben. Auf diese Schriften wird ausdrücklich verwiesen.
Bevorzugt werden im Pfropfungsschritt b) ethylenisch ungesättigte Monomere, ausgewählt aus der Gruppe enthaltend sulfonierte Styrolderivate, sulfonierte Acrylate, sulfonierte Methacrylate und Mischungen daraus, eingesetzt.

Besonders bevorzugte ethylenisch ungesättigte Monomere ausgewählt aus der Gruppe der sulfonierten Monomere sind z. B. Alkalistyrol-4-sulfonate, Alkali-3-(sulfopropyl)methacrylate, Alkali-3-(sulfopropyl)acrylate, Alkali-2-acrylamido-2-methyl-1-propansulfonate, Alkali-2-methacrylamido-2-methyl-1-propan-sulfonate oder Alkali-bis-(1-sulfopropyl)-3-itaconate. Ganz besonders bevorzugt sind solche Zusammensetzungen, die Pfropfmischpolymere enthalten, die durch Einsatz von ethylenisch ungesättigten Monomeren ausgewählt aus der Gruppe enthaltend Alkalistyrol-4-sulfonate, Alkali-3-(sulfopropyl)-methacrylate, Alkali-3-(sulfopropyl)-acrylate oder Mischungen daraus, erhalten werden.

Als Monomere die eine Phosphat- oder Phosphonatgruppe aufweisen können bevorzugt solche, ausgewählt aus der Gruppe enthaltend Alkali-2-(acryloyloxy)ethylphosphate, Alkali-2-(methacryloyloxy)-ethylphosphate, Alkalivinylphosphonate, Alkali-2-(acryloyloxy)ethyl-phosphonate, Alkali-2-(methacryloyloxy)-ethylphosphonate, eingesetzt werden.

Die Monomere können nicht nur einzeln eingesetzt werden sondern es ist ebenso möglich, jegliche denkbaren Kombinationen aus den vorgenannten Monomeren in beliebigen Mischungsverhältnissen einzusetzen. Einzige Voraussetzung dafür ist nur deren Verträglichkeit untereinander. So kann es z. B. vorteilhaft sein, solche Kombinationen von Monomeren radikalisch umzusetzen, in denen die Monomere unterschiedliche Reaktivitäten aufweisen, so dass Gradientencopolymere als Pfropfmischpolymere erhalten werden können.

Neben den anionische Gruppen tragenden ethylenisch ungesättigten Monomeren können auch ethylenisch ungesättige Monomeren, die keine anionischen Gruppen tragen, wie z.B. Alkylacrylate, Alkylmethacrylate, Acrylamide oder Methacrylamide oder Styrol in Mischung mit den anionische Gruppen tragenden ethylenisch ungesättigten Monomeren mit Polyethersiloxanen bei der radikalischen Umsetzung umgesetzt werden. Voraussetzung ist auch dabei wieder die Kompatibilität der Monomeren, wobei zur Erreichung der Kompatibilität auch ein geeignetes Lösemittel eingesetzt werden kann. Werden Mischungen von anionischen Gruppen (Sulfat-, Sulfonat-, Phosphat- und/oder PhosphonatGruppen) tragenden ethylenisch ungesättigten Monomeren und keine anionischen Gruppen tragenden ethylenisch ungesättigten Monomeren eingesetzt, so beträgt das molare Verhältnis von anionischen Gruppen tragenden Monomeren zu solchen ohne anionische Gruppen vorzugsweise von 100 zu 1 bis 100 zu 25, bevorzugt von 100 zu 1 bis 100 zu 10. Bevorzugt werden aber nur Monomere eingesetzt, die anionische Gruppen aufweisen.

Als Alkenylpolyether im Hydrosilylierungsschritt a) oder als Polyethergruppe aufweisende Verbindung im Pfropfungsschritt b) kann ein Alkenylpolyether ausgewählt aus Alkenylpolyethern der Formel (II)

CH₂=CR³-L- (C₂H₄O) ₙ (C₃H₆O)ₚ (C₁₂H₂₄O)_{q} (C₈H₈Oᵣ) Z (II)

wobei
- R³: H oder Methyl ist,
- L: ein zweiwertiger gegebenenfalls verzweigter Kohlenwasserstoffrest mit 1 bis 18 C-Atomen, vorzugsweise 1 bis 4 C-Atomen und bevorzugt einem C-Atom ist,
- Z: ein H-Atom oder ein einwertiger linearer oder verzweigter organischer Rest wie Alkyl, Aryl, Alkylaryl, Arylalky oder Acetoxy, vorzugsweise mit 1 bis 20, bevorzugt 1 bis 10 Kohlenstoffen, die Indices
- n, p, q und r: voneinander unabhängige ganze Zahlen von 0 bis 100 sind, die Summe aus n, p, q und r ≥ 1 und falls mehr als einer der Indices n, p, q, r > 0 ist, die allgemeine Formel (II) ein statistisches Oligomer oder ein Block-oligomer sein kann, eingesetzt wird. Vorzugsweise beträgt die Summe aus n, p, q und r 2 bis 250, bevorzugt 5 bis 150 und besonders bevorzugt 10 bis 80. Bevorzugt sind solche Alkenylpolyether (II), bei denen n und/oder p jeweils ≥ 3, vorzugsweise 3 bis 100 und bevorzugt 5 bis 50 ist. Besonders bevorzugt sind solche Alkenylpolyether (IV) bei denen n und p jeweils ≥ 3, vorzugsweise 3 bis 100 und bevorzugt 5 bis 80 ist und
q und/oder r 0, vorzugsweise q und r = 0,
ist.

Die nach Formel (II) beschriebenen Polyether können z. B. aus einem Startalkohol mit einer alpha-ständigen Kohlenstoff-Kohlenstoff Doppelbindung durch Anlagerung von Monomeren gewonnen werden. Geeignete Monomeren sind Ethylenoxid, Propylenoxid, Verbindungen aus der Gruppe Tetrahydrofuran, 1,2-Epoxybutan, 2,3-Epoxybutan, Dodecyloxid, Styroloxid und/oder Methylstyroloxid und Mischungen daraus. Dabei kann die Verteilung der Monomere beliebig gewählt sein, so dass ein statistisches Oligomer oder ein Blockpolymer erhalten werden kann.

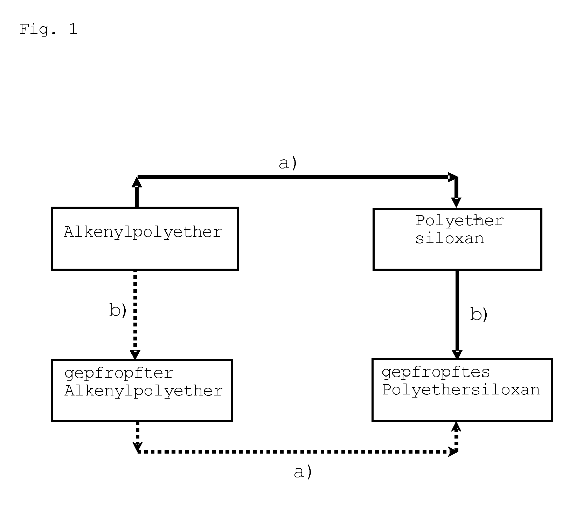

Die (anionischen) siliziumorganischen Propfmischpolymeren können prinzipiell durch zwei verschiedene Ausführungsformen des Verfahrens hergestellt werden (vergleiche Fig. 1).

Bei der ersten Ausführungsform können die siliziumorganischen Pfropfmischpolymere dadurch erhalten werden, dass zunächst der Hydrosilylierungsschritt a) unter Erhalt eines Polyethersiloxans durchgeführt wird und dieses Polyethersiloxan anschließend in dem radikalischen Pfropfungssschritt b) mit mindestens einem ethylenisch ungesättigten Monomeren, welches mindestens eine anionische Funktionalität, ausgewählt aus der Gruppe der Sulfonate, Sulfate, Phosphate und/oder Phosphonate, aufweist, umgesetzt wird. Bei dieser Verfahrensvariante wird in dem Hydrosilylierungsschritt a) ein Alkenylpolyether mit einem Wasserstoffsiloxan, enthaltend mindestens eine Si-H Gruppe, nach einer der für den Fachmann bekannten Methoden umgesetzt. In der zweiten Ausführungsform des Verfahrens wird zuerst der Pfropfungsschritt b) durchgeführt und danach die gepfropften Alkenylpolyether im Hydrosilylierungsschritt a) mit den entsprechenden Wasserstoffsiloxanen, enthaltend mindestens eine Si-H Gruppe, zu erfindungsgemäß einzusetzenden Pfropfmischpolymeren umgesetzt. Je nach Verfahrensführung können mit beiden Verfahrensvarianten Pfropfmischpolymeren erhalten werden, die mit den üblichen analytischen Methoden nicht zu unterscheiden sind.

Bei der ersten Verfahrensvariante werden die zuerst Polyethersiloxane durch Hydrosylilierung eines Alkenylpolyethers mit einem Wasserstoffsiloxan, enthaltend mindestens eine Si-H Gruppe, in Hydrosilylierungsschritt a) hergestellt. Diese Polyethersiloxane werden anschließend radikalisch mit ethylenisch ungesättigten Monomeren in Gegenwart eines freie radikale erzeugenden Mittels im Pfropfungsschritt b) umgesetzt.

Beim Pfropfungsschritt werden auf den Polyetherresten der Polyethersiloxane durch Wasserstoffabstraktion Radikale erzeugt, auf die durch Addition an ethylenisch ungesättigte Monomere eine Polymerkette gepfropft werden kann. Durch die Verwendung von anionische Gruppen tragenden Monomeren lassen sich somit anionische Polymerketten auf die Polyetherreste der Polyethersiloxane pfropfen. Damit ergeben sich Strukturen, die mehr als eine anionische Gruppierung pro gepfropftem Polyetherrest tragen können. Die radikalische Umsetzung hat den Vorteil, dass außer Polyetherresten keine weiteren reaktiven Gruppen notwendig sind. Somit ist eine große Bandbreite leicht verfügbarer Poylethersiloxane als Pfropfgrundlage einsetzbar. Zudem kann die radikalische Umsetzung bei hinreichend milden Bedingungen durchgeführt werden, wodurch die Bildung von unerwünschten Nebenprodukten vermieden wird.

Bei dieser Verfahrensvariante, bei der zunächst der Hydrosilylierungsschritt a) und anschließend der Pfropfungsschritt b) durchgeführt wird, wird im Hydrosilylierungsschritt vorzugsweise zunächst ein als Pfropfgrundlage dienendes Polyethersiloxan der Formel (III) hergestellt. Die Herstellung kann mit für den Fachmann geläufigen Methoden durch Hydrosilylierung von Wasserstoffsiloxanen der allgemeine Formel (III) mit Alkenylpolyethern der allgemeinen Formel (II) in Gegenwart von Platin oder Rhodium Katalysatoren, wie z. B. in der EP-A-0 659 803 beschrieben, erfolgen.

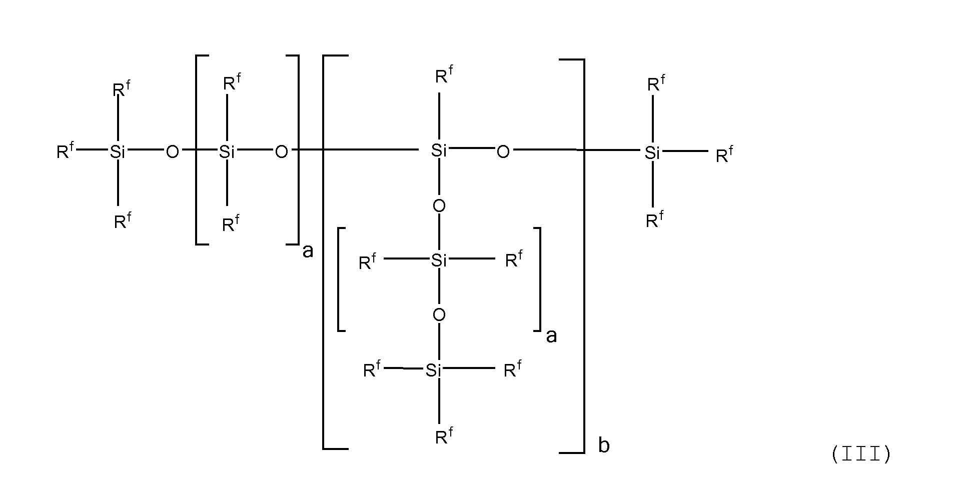

Dabei haben in Formel (III) a, b und R^{f} die Bedeutung wie in Formel (IV) mit der Ausnahme, dass R²= H ist.

Vorzugsweise werden in Verfahrensschritt a) Polyethersiloxane erhalten, welche ausgewählt sind aus Polyethersiloxanen der Formel (IV), 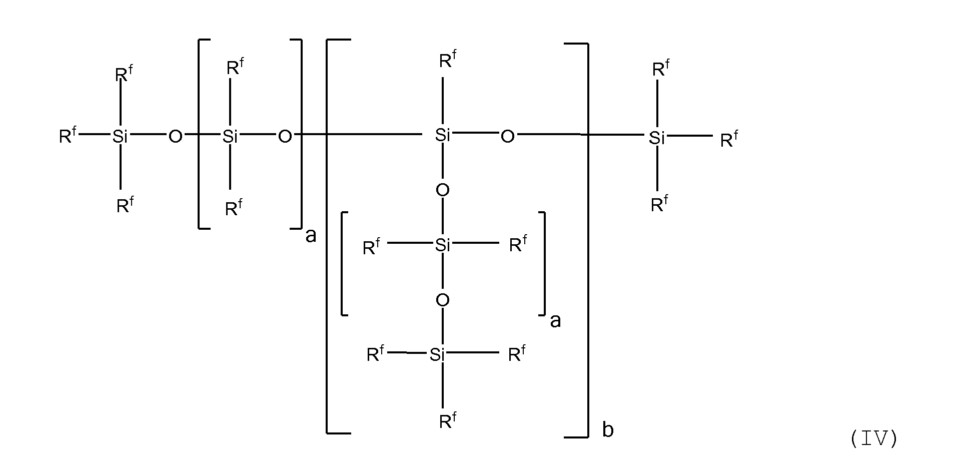 mit
- b: eine Zahl von 0 bis 10, vorzugsweise < 5 und bevorzugt 0,
- a: eine Zahl von 1 bis 500, vorzugsweise 1 bis 250 und bevorzugt 1 bis 100,
- R^{f}: gleiche oder verschiedene Reste R¹ oder R², mit der Maßgabe, dass mindestens ein Rest R^{f} ein Rest R² ist,
- R¹: Alkylreste mit 1 bis 16 C-Atomen, vorzugsweise 2 bis 6 C-Atome, oder ein Arylrest, vorzugsweise Phenyl, wobei die Reste R¹ substituiert oder unsubstituiert sein können,
- R²: ein Polyetherrest der allgemeinen Formel (V)

-Y (C₂H₄O) ₙ (C₃H₆O) ₚ (C₁₂H₂₄O) _{q} (C₈H₈Oᵣ) Z (V)

wobei
- Y: ein zweiwertiger gegebenenfalls verzweigter Kohlenwasserstoffrest mit 1 bis 20 C-Atomen, vorzugsweise 2 bis 6 C-Atomen und bevorzugt 3 C-Atomen ist,
- Z: ein H-Atom oder ein einwertiger linearer oder verzweigter organischer Rest wie Alkyl, Aryl, Alkylaryl, Arylalky oder Acetoxy ist, vorzugsweise mit 1 bis 20, bevorzugt 1 bis 10 Kohlenstoffen, die Indices
- n, p, q und r: voneinander unabhängige ganze Zahlen von 0 bis 100 sind, wobei die Summe aus n, p, q und r ≥ 1, vorzugsweise 2 bis 250, bevorzugt 5 bis 150 und besonders bevorzugt 10 bis 80 ist, und falls mehr als einer der Indices n, p, q, r > 0 ist, die allgemeine Formel (V) ein statistisches Oligomer oder ein Blockoligomer sein kann. Vorzugsweise ist R² ein Polyetherrest der Formel (V) bei dem n und/oder p jeweils ≥ 3, vorzugsweise 3 bis 100 und bevorzugt 5 bis 50 ist. Bevorzugt ist R² ein Polyetherrest der Formel (V) bei dem n und p jeweils ≥ 3, vorzugsweise 3 bis 100 und bevorzugt 5 bis 80 ist und q und/oder r 0, vorzugsweise q und r 0, ist.

Die erhaltenen Polyethersiloxane können geradkettig (b = 0) oder verzweigt sein (0 < b ≤ 10). Die Werte von a und b sind als durchschnittliche Werte zu verstehen, da die eingesetzten Polysiloxane nicht nur als Reinstoff sondern auch in Form von äquilibrierten Gemischen vorliegen können. Es ist dem Fachmann bekannt, dass die Verbindungen aufgrund ihrer polymeren Natur in Form eines Gemisches mit einer im Wesentlichen durch statistische Gesetzte geregelten Verteilung vorliegen. Die Werte für alle Indices stellen deshalb Mittelwerte dar. Vorzugsweise werden solche äquilibrierten Gemische von Polysiloxanen eingesetzt.

Die aus dem Hydrosilylierungsschritt a) erhaltenen Polyethersiloxane können wie oben beschrieben substituierte oder unsubstituierte Reste R¹ und/oder R² aufweisen. Weisen die erhaltenen Polyethersiloxane substituierte Reste R¹ und/oder R² auf, so können die Substituenten funktionelle und nicht-funktionelle Gruppen sein, wobei die Substituenten nicht mit dem radikalischen Polymerisationsprozess interferieren dürfen. Beispiele für solche zusätzlich vorhandenen funktionellen Gruppen sind z. B. Acyloxygruppen (Acetoxygruppen), Hydroxylgruppen und/oder Alkoxygruppen (Methoxygruppen), aber auch Substituenten, wie z. B. Halogenatome, wobei die Halogenatome vorzugsweise nicht Fluor sind. In der vorliegenden Erfindung werden vorzugsweise allerdings solche Siloxane eingesetzt bzw. Polyethersiloxane erhalten, bei denen die Reste R¹ keine zusätzlichen funktionellen Gruppen (Substituenten) aufweisen. Besonders bevorzugt werden solche Siloxane eingesetzte bzw. Siliconpolyether-Copolymere (Polyethersiloxane) erhalten, bei denen alle Reste R¹ Methylreste sind.

In der zweiten Verfahrensvariante werden die siliziumorganischen Pfropfmischpolymere vorzugsweise durch ein Verfahren erhalten, bei dem zunächst in einem radikalischen Pfropfungsschritt b) ein Alkenylpolyether, vorzugsweise ein Alkenylpolyether der Formel (II) als Polyethergruppe aufweisende Verbindung mit mindestens einem ethylenisch ungesättigten Monomeren, welches mindestens eine anionische Funktionalität, ausgewählt aus der Gruppe der Sulfonate, Sulfate, Phosphate und/oder Phosphonate, aufweist, umgesetzt wird und anschließend der in Verfahrensschritt b) erhaltene gepfropfte Alkenylpolyether in einem Hydrosilylierungsschritt a) mit Wasserstoffsiloxanen, vorzugsweise mit einem Wasserstoffsiloxan der Formel (I), umgesetzt wird.

Die Hydrosilylierung in Verfahrensschritt a) wird vorzugsweise in Gegenwart eines Edelmetallkatalysators, insbesondere eines Rhodium- oder Platinkatalysators durchgeführt. Bevorzugt wird der Katalysator in einer Menge von 5 bis 20 Massen-ppm eines Platin- oder Rhodiumkatalysators (Massenanteil Edelmetall in Bezug auf die Masse des Gesamtansatzes) eingesetzt. Besonders bevorzugt wird der Katalysator in Form von Hexachloroplatinsäure, cis-Platin, Di-µ-chloro-bis[chlor-(cyclohexen)platin(II)] oder Karstedt-Katalysator (gegebenenfalls in Lösungsmitteln gelöst), oder in Form von fein verteiltem elementaren Platin auf einem Trägermaterial wie Aluminiumoxid, Silicagel oder Aktivkohle eingesetzt. Die Hydrosilylierung wird vorzugsweise bei einer Temperatur von 60 bis 200 °C, bevorzugt 70 bis 130 °C durchgeführt. Bevorzugt wird die Hydrosilylierung bei einem Druck von 0,9 bis 20 bar, bevorzugt bei 0,980 bis 2 bar durchgeführt. Es kann vorteilhaft sein, wenn die Hydrosilylierung in einem Lösungsmittel durchgeführt wird. Als Lösungsmittel können Toluol, Xylol oder auch Alkohole, wie z. B. 2-Butoxyethanol, Butylglycol, Butyldiglycol, Isopropanol, Ethylenglycol oder 1,2-Propandiol, Ether, wie z. B. Di(propylenglykol)butylether oder Di(propylenglykol)methylether, Polyether, wie z. B., Allyl-, Methyl- oder Butylgestartete Polyether oder Wasser eingesetzt werden.

Die ethylenisch ungesättigten Monomere können im Pfropfungsschritt b) unter Verwendung irgendeiner konventionellen, dem Fachmann bekannten synthetischen Methode radikalisch mit einer, eine Polyethergruppe aufweisende Verbindung, umgesetzt werden. Je nachdem, ob der Pfropfungsschritt der erste oder zweite Verfahrensschritt des erfindungsgemäßen Verfahrens ist, werden als Polyethergruppe aufweisende Verbindung Alkenylpolyether oder Polyethersiloxane umgesetzt. Der Pfropfungsschritt b) kann als Lösungspolymerisation, Emulsionspolymerisation, umgekehrte Emulsionspolymerisation, Suspensionspolymerisation, umgekehrte Suspensionspolymerisation oder als Fällungspolymerisation durchgeführt werden, ohne dass die verwendbaren Methoden darauf beschränkt sind. Die radikalische Umsetzung (Pfropfungsschritt b)) kann z. B. wie in DE-1 645 569 beschrieben, auf welche ausdrücklich verwiesen wird, durchgeführt werden.

Der Pfropfungsschritt b) kann in Gegenwart oder bei Abwesenheit von Lösungsmitteln erfolgen. Der Pfropfungsschritt b) kann in Ein-, Zwei- oder Mehrphasensystemen durchgeführt werden. Wichtige Voraussetzung dabei ist lediglich die wechselseitige Löslichkeit der Reaktionspartner im entsprechenden Medium (Lösungsmittel). Wird im Pfropfungsschritt b), insbesondere bei der Lösungsmittelpolymerisation, ein Lösungsmittel eingesetzt, so kann dieses ein organisches Lösemittel, das eingesetzte Polysiloxan(-gemisch) bzw. der eingesetzte Alkenylpolyether oder Wasser sein. Besonders bevorzugt wird Wasser als Lösungsmittel beim Einsatz von sulfonat- und/oder sulfat- und/oder phosphat- und/oder phosphonathaltigen ethenylisch ungesättigten Monomeren eingesetzt.

Der Pfropfungsschritt b) kann unter Normaldruck, Überdruck, oder Unterdruck durchgeführt werden. Besonders bevorzugt wird der Pfropfungsschritt b) unter Normaldruck durchgeführt.

Es kann notwendig oder vorteilhaft sein, wenn der Pfropfungsschritt b) in Gegenwart von Reglern durchgeführt wird. Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen die regelnd auf das Molekulargewicht der erhaltenen Pfropfpolymerisate wirken, verwendet werden. Als Regler können gegebenenfalls auch thiolgruppenhaltige Siliconverbindungen oder thiolgruppenhaltige Alkenylpolyether eingesetzt werden. Bevorzugt werden aber siliconfreie Regler eingesetzt oder die Synthesebedienungen so eingestellt, dass keine Regler verwendet werden müssen.

Ein Stoff, der unter den Reaktionsbedingungen freie Radikale bildet, ist wesentliche Voraussetzung und Bestandteil des Pfropfungsschrittes b) zur Herstellung der Pfropfmischpolymere. Alle Mittel, die prinzipiell geeignet sind, freie Radikale zu erzeugen, können eingesetzt werden, u. a. aber nicht ausschließlich ionisierende Bestrahlung, organische Peroxyverbindungen, Azo-Verbindungen oder anorganische Radikalbildner, wie z. B. anorganische Peroxodisulfate. Ganz besonders bevorzugt werden Alkali- und Ammoniumperoxodisulfat als Radikalbildner eingesetzt. Weiterhin können auch Redoxsysteme, wie z.B. Kaliumperoxodisulfat und Natriumhydrogensulfit, zur Erzeugung von Radikalen eingesetzt werden.

Zur besseren Dosierung oder Verträglichkeit der Radikalbildner kann es vorteilhaft sein, die Radikalbildner in Form von Lösungen dieser in einem geeigneten Lösungsmittel einzusetzen. Als geeignete Lösungsmittel können alle Lösungsmittel eingesetzt werden, die mit der radikalischen Umsetzung nicht interferieren. Vorzugsweise werden die Lösungsmittel eingesetzt, die als geeignete Lösungsmittel für die radikalische Umsetzung genannt wurden. Werden anorganische Radikalbildner eingesetzt, wird als Lösungsmittel für die Radikalbildner bevorzugt Wasser eingesetzt.

Die für die Reaktion gewählte Temperatur hängt von den zum Einsatz kommenden Radikale bildenden Verbindungen ab. Wird die Radikalbildung thermisch induziert, spielt die Halbwertszeit des Zerfalls in Primärteilchen eine entscheidende Rolle und kann so gewählt werden, dass sich in der Reaktionsmischung immer ein gewünschtes Verhältnis von freien Radikalen einstellt. Für die thermisch induzierte Radikalbildung werden vorzugsweise Temperaturen von 30 °C bis 225 °C, bevorzugt 50 bis 180 °C eingesetzt, wobei die Temperatur nach oben durch die thermische Zersetzung der Pfropfgrundlage begrenzt wird. Im Fall des Einsatzes von Redoxsystemen als Radikalbildner werden vorzugsweise Temperaturen von -30 °C bis 50 °C eingesetzt.

Die erfindungsgemäßen Zusammensetzungen können Pfropfmischpolymere aufweisen, die jegliche relative Mengen ethenylisch ungesättigter Verbindungen aufgepfropft auf das Polyethersiloxan enthalten. Bevorzugte Zusammensetzungen weisen solche Pfropfmischpolymere auf, die durch Umsetzen von ethylenisch ungesättigten Monomeren (die eine anionische Gruppe aufweisen) mit Polyethersiloxanen (Variante bei der der Pfropfungssschritt b) der nachfolgende Verfahrensschritt ist) oder Alkenylpolyethern (Variante bei der der Pfropfungssschritt b) der erste Verfahrensschritt ist) in einem Massenverhältnis von 0,02 zu 1 bis 5 zu 1, vorzugsweise von 0,02 zu 1 bis 1 zu 1, bevorzugt von 0,02 zu 1 bis 1 zu 1, besonders bevorzugt von 0,02 zu 1 bis 0,5 zu 1 und ganz besonders bevorzugt von 0,05 zu 1 bis 0,1 zu 1 erhalten werden.

Die durch das beschriebene Verfahren erhaltenen (anionischen) Pfropfmischpolymere können allein die erfindungsgemäße Zusammensetzung bilden. Die erfindungsgemäßen Zusammensetzungen können aber auch weitere, insbesondere zur Erzeugung von Schäumen geeignete Zusätze aufweisen. Dies können z. B. sein:
a) amphotere Kohlenwasserstofftenside wie beispielsweise Betaine und Sulfobetaine. Kommerziell verfügbar sind hier beispielsweise Tego^{®} Betain F50 (Goldschmidt GmbH), Chembetain CAS (Cocoamidopropylbetain) von Chemron, Mirataine CS (Rhodia), Mackam 2CYSF (McIntyre), Deriphat D-160C (Henkel),
b) anionische Kohlenwasserstofftenside wie beispielsweise Alkylcarboxylate, -sulfate, -sulfonate und deren ethoxylierten Derivate. Als Beispiele seien Octyl- und Lauryldipropionate, Natriumoctylsulfat, Natriumdecylsulfat, Natriumdodecylsulfat und Ammoniumlaurylethersulfate angeführt.
c) nichtionische Kohlenwasserstofftenside wie beispielsweise alkoxylierte Alkylphenole, lineare oder verzweigte Alkohole und deren Alkoxylate wie beispielsweise Oleylalkoholethoxylate, Fettsäuren und deren Derivate, Alkylamine, Alkylamide, Acetylenglykole, Gemini-Tenside wie beispielsweise Surfynol 104 (AirProducts), Alkylglycoside und Polyglycoside wie in US-5,207,932 beschrieben, Ethylenoxid-Propylenoxid-Blockpolyether,
d) Polymere Schaumstabilisatoren und Verdicker wie beispielsweise Proteine oder deren Abbauprodukte wie beispielsweise teilhydrolysierte Proteine, Stärke, Polyvinylharze wie beispielsweise Polyvinylalkohol, Polyacrylamide, Carboxyvinylpolymere oder Polypyrrolidine,
e) die in WO-A-2004/112907 offenbarte Kombination mit hochmolekularen sauren Polymeren und koordinierenden Salzen,
f) Schaumhilfsmitteln wie zum Beispiel Butyldiglycol, Glycerin, Ethylenglycolmonoalkylether, Diethylenglycolmonoalkylether, Triethylenglycolmonoalkylether, Propylenglycolmonoalkylether, Dipropylenglycolmonoalkylether, Tripropylenglycolmonoalkylether, 1-Butoxyethoxy-2-propanol, Hexylenglycol,
g) Gefrierschutzmittel wie beispielsweise Alkali- oder Erdalkalichloride, Harnstoff, Glycole oder Glycerin,
h) Zusätze gegen Ausflockungen, Separation oder Korrosion wie beispielsweise Zitronensäure, Weinsäure, Polyaminopolycabonsäuren oder Ethylendiamintetraacetate, o-Phenylphenol, Phosphatester oder Tolyltriazol,
i) Film-bildende Zusätze wie beispielsweise die in der Schriftenfamilie DE-A-28 262 24, WO-A-80/01883, US-,464,267, US-4,387,032, US-4,060,489, US-4,149,599 und US-4,060,132 beschriebenen Polysaccaride aber auch beispielsweise Xanthan, Pectin, Algin, Agar, Karrageen, Pectinsäure, Stärke, modifizierte Stärke, Alginsäure, gummi arabicum, Dextrane, Cellulose, Hydroxyalkylcellulosen, Celluloseether und -ester und dergleichen,
j) Konservierungsmittel wie beispielsweise Kathon CG/ICP (Rhom & Haas) oder Givgard G-4-40 (Givaudan),
k) Wasser und/oder
l) Zusätze, die für den Fachmann nahe liegend sind und hier nicht weiter aufgeführt sind.

Bevorzugt weisen erfindungsgemäße Zusammensetzungen neben den Pfropfmischpolymeren zumindest Wasser auf. Bevorzugte Zusammensetzungen weisen einen Gehalt an Pfropfmischpolymeren von 0,05 bis 75 Gew.-%, vorzugsweise 0,1 bis 50 Gew.-% und besonders bevorzugt 0,2 bis 25 Gew.-% auf.

Die erfindungsgemäßen Zusammensetzungen bzw. die in den Zusammensetzungen enthaltenen Pfropfmischpolymeren können zur Herstellung eines Schaums, vorzugsweise eines wässrigen Schaums verwendet werden. Die erfindungsgemäßen Zusammensetzungen bzw. die in den Zusammensetzungen enthaltenen Pfropfmischpolymeren können insbesondere zur Herstellung von Feuerlöschschäumen oder Schäumen zur Reinigung von Anlagen oder Apparaturen, wie z. B. Tanklagern, Rohren, Pipelines oder Kesseln, zur Verringerung von Verdampfungsverlusten flüchtiger Kohlenwasserstoffe oder anderer organischer Lösemittel und zur Verhinderung des Entstehens von Bränden verwendet werden. Die erfindungsgemäßen Zusammensetzungen bzw. die in den Zusammensetzungen enthaltenen Pfropfmischpolymeren sind auch zur Erzeugung von Schäumen für Übungszwecke verwendbar.

Wird die Zusammensetzung zur Herstellung von Feuerlöschschäumen verwendet, kann es vorteilhaft sein, wenn der Zusammensetzung noch Tenside mit perfluorierten Gruppen, beispielsweise solche wie in den US-Schriften 4,060,489, 4,420,434, 4, 472, 286, 4, 999, 119, 5,085,786, 5,218,021 oder 5,616,273 beschrieben, zugesetzt werden/sind.

Die Mengen an Tensiden mit perfluorierten Gruppen ist so zu wählen, dass ohne die erfindungsgemäßen siliziumorganischen Verbindungen bei der gegebenen Fluortensid-Konzentration kein dem Stand der Technik entsprechender Löschschaum erhalten werden könnte. Auf diese Weise kann ein Löschschaum erhalten werden, der bei der Verwendung eine weiter verbesserte Löschgeschwindigkeit und eine verminderte Widerentzündungsgefahr aufweist. Es hat sich allerdings gezeigt, dass der Gesamtgehalt an Tensiden mit perfluorierten Gruppen gleich oder geringer sein kann als die Hälfte der zur Erzeugung eines vergleichbaren Löschschaums aus Zusammensetzungen ohne nachweisbare Mengen an den siliziumorganischen Pfropfmischpolymeren, erforderlichen Konzentration an Tensiden mit perfluorierten Gruppen (PFT).

Die erfindungsgemäße Zusammensetzung kann insbesondere zur Erzeugung von wässrigem Schaum verwendet werden, der auf eine hydrophobe Oberfläche oder eine Flüssigkeit, vorzugsweise auf eine hydrophobe Flüssigkeit aufgebracht wird oder dort erzeugt wird. Dadurch, dass die erfindungsgemäßen Zusammensetzungen zu wässrigen Schäumen verarbeitet werden können, die auf hydrophoben Materialien, insbesondere Flüssigkeiten relativ stabil sind, kann mit einem solchen Schaum vermieden oder verhindert werden, dass ein brennbarer Dampf aus einer Flüssigkeit entweicht bzw. der Brand einer brennbaren Flüssigkeit gelöscht werden.

Ausgehend von der Lehre von US-5,207,932 weisen die erfindungsgemäßen Zusammensetzungen deshalb vorzugsweise weniger als 0,20 Gew.-% organisch gebundenes Fluor, bezogen auf das Gewicht der erfindungsgemäßen Zusammensetzung oder weniger als 0,006 Gew.-% organisch gebundenes Fluor im Löschschaum, der aus der Verdünnung der Zusammensetzung auf die Anwendungskonzentration hervorgegangen ist. Die Lehre gemäß dem Stand der Technik, wie sie z. B. den oben genannten Schriften US-3,849,315, US-4,038,195, US-3,957,657 und US-3,957,658 sowie den Schriften der Schriftenfamilie DE-A-28 26 224, WO-A-80/01883, US-4,464,267, US-4,387,032, US-4,060,489, US-4,149,599 und US-4, 060, 132 entnommen werden kann, erfordert eine fünf- bis zehnfache Konzentration an Tensiden mit perfluorierten Gruppen.

Die erfindungsgemäßen Zusammensetzungen können auf verschiedenste Weise und in verschiedenen Konzentrationen hergestellt werden. Insbesondere können sie durch Abmischen hergestellt werden. Bevorzugt sind Zusammensetzungen, die durch Mischen der wie beschrieben erhältlichen siliziumorganischen Propfmischpolymeren mit amphoteren Kohlenwasserstofftensiden, anionischen Kohlenwasserstofftensiden, nichtionischen Kohlenwasserstofftensiden, polymeren Schaumstabilisatoren und/oder Verdickern, hochmolekularen sauren Polymeren und/oder koordinierenden Salzen, Schaumhilfsmitteln, Gefrierschutzmitteln, Zusätze gegen Ausflocken, Korrosion oder Separation, filmbildenden Zusätzen, Konservierungsmitteln, Wasser und Zusätzen, die für den Fachmann nahe liegend sind, in den Konzentrationen, wie sie die in dieser Anmeldung aufgeführten Schriften lehren.

Die Erfindung wird durch die Fig. 1 näher erläutert, ohne dass die Erfindung auf die dort dargestellte Ausführungsform beschränkt sein soll.

In Fig. 1 sind die zwei verschiedenen Ausführungsformen des vorliegenden erfindungsgemäßen Verfahrens schematisch dargestellt. Ausgehend vom Alkenylpolyether wird entweder zunächst ein Hydrosilylierungsschritt a) unter Erhalt eines Polyethersiloxans durchgeführt, welches anschließend im Pfropfschritt b) zum gepfropften Polyethersiloxan umgesetzt wird, oder aber es erfolgt zunächst der Pfropfungsschritt b) unter Erhalt eines gepfropften Alkenylpolyethers, der anschließend in einem Hydrosilylierungsschritt a) zum gepfropften Polyethersiloxan umgesetzt wird.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele 1 bis 12:

### Herstellung von siliziumorganischen Pfropfmischpolymeren

### Beispiel 1:

### Umsetzung eines polyethylenoxidhaltigen Siliconpolyethers mit Natrium-4-vinylbenzolsulfonat unter Verwendung von Kaliumperoxodisulfat als Initiator

500 g Siliconpolyether (Tegopren^{®} 5842, Handelsname der Goldschmidt GmbH, CAS-Nr.: 68937-54-2) wurden in einem Vierhalskolben, ausgestattet mit Rührer, Intensivkühler, Thermometer und Tropftrichter, unter Stickstoffatmosphäre auf 80 °C aufgeheizt. 50 g Natrium-4-vinylbenzolsulfonat (Hersteller: Tosoh Organic Chemical Co.) wurden unter leichtem Erwärmen in 100 g Wasser gelöst. 16,6 g Kaliumperoxodisulfat (bezogen von Sigma-Aldrich) wurden unter leichtem Erwärmen in 350 g Wasser gelöst. Die Lösungen von Natrium-4-vinylbenzolsulfonat und Kaliumperoxodisulfat wurden gemischt und bei 80 °C innerhalb von 120 Minuten zum vorgelegten Siliconpolyether zugetropft. Die Reaktionsmischung wurde anschließend eine Stunde bei 90 °C gehalten und wurde dann auf Raumtemperatur abgekühlt. Man erhielt eine leicht gelbliche, klare wässrige 55 Gew.-%ige Lösung des Produkts in Wasser. Das Wasser kann durch Destillation aus dem Reaktionsprodukt entfernt werden.

### Beispiel 2:

### Umsetzung eines polyethylenoxid-/polypropylenoxid-haltigen Siliconpolyethers mit Natrium-4-vinylbenzolsulfonat unter Verwendung von Kaliumperoxodisulfat als Initiator

500 g Siliconpolyether (Tegopren^{®} 5851, Handelsname der Goldschmidt GmbH, CAS-Nr.: 68937-55-3) wurden in einem Vierhalskolben, ausgestattet mit Rührer, Intensivkühler, Thermometer und Tropftrichter, unter Stickstoffatmosphäre auf 80 °C aufgeheizt. 50 g Natrium-4-vinylbenzolsulfonat (Hersteller: Tosoh Organic Chemical Co.) wurden unter leichtem Erwärmen in 100 g Wasser gelöst. 16,6 g Kaliumperoxodisulfat (bezogen von Sigma-Aldrich) wurden unter leichtem Erwärmen in 350 g Wasser gelöst. Die Lösungen von Natrium-4-vinylbenzolsulfonat und Kaliumperoxodisulfat wurden gemischt und bei 80 °C innerhalb von 120 Minuten zum vorgelegten Siliconpolyether zugetropft. Die Reaktionsmischung wurde anschließend eine Stunde bei 90 °C gehalten und auf Raumtemperatur abgekühlt. Man erhielt eine leicht gelbliche, klare wässrige 55 Gew-%ige Lösung des Produkts in Wasser. Das Wasser kann durch Destillation aus dem Reaktionsprodukt entfernt werden.

### Beispiel 3:

### Umsetzung eines polyethylenoxid-/polypropylenoxid-haltigen Siliconpolyethers mit Kaliumsulfopropylmethacrylat unter Verwendung von Kaliumperoxodisulfat als Initiator.

500 g Siliconpolyether (Tegopren^{®} 5851, Handelsname der Goldschmidt GmbH, CAS-Nr.: 68937-55-3) wurden in einem Vierhalskolben ausgestattet mit Rührer, Intensivkühler, Thermometer und Tropftrichter unter Stickstoffatmosphäre auf 80 °C aufgeheizt. 25 g Kaliumsulfopropylmethacrylat (Handelsname: RALU^{®}MER SPM der Firma Raschig GmbH) wurden in 75 g Wasser gelöst. 15,8 g Kaliumperoxodisulfat(bezogen von Sigma-Aldrich) wurden unter leichtem Erwärmen in 275 g Wasser gelöst. Die Lösungen von Kaliumsulfopropylmethacrylat und Kaliumperoxodisulfat wurden gemischt und bei 80 °C innerhalb von 120 Minuten zum vorgelegten Siliconpolyether zugetropft. Die Reaktionsmischung wurde anschließend eine Stunde bei 90 °C gehalten und wurde dann auf Raumtemperatur abgekühlt. Man erhielt eine leicht klare wässrige 60 Gew-%ige Lösung des Produkts in Wasser. Das Wasser kann durch Destillation aus dem Reaktionsprodukt entfernt werden.

### Beispiel 4:

### Umsetzung eines polyethylenoxid-/polypropylenoxid-haltigen Siliconpolyethers mit Methacryloyloxyethylphosphat unter Verwendung von Kaliumperoxodisulfat als Initiator

250 g Siliconpolyether (Tegopen^{®} 5851, Handelsname der Goldschmidt GmbH, CAS-Nr.: 68937-55-3) wurden in einem Fünfhalskolben ausgestattet mit Rührer, Intensivkühler, Thermometer und zwei Tropftrichtern unter Stickstoffatmosphäre auf 80 °C aufgeheizt. 7,9 g Kaliumperoxodisulfat(bezogen von Sigma-Aldrich) wurden unter leichtem Erwärmen in 175 g Wasser gelöst. Die Lösung von Kaliumperoxodisulfat und 12,5 g Methacryloyloxyethylphosphat (Produkt der Röhm GmbH) wurden gleichzeitig aber getrennt bei 80 °C innerhalb von 120 Minuten zum vorgelegten Siliconpolyether zugetropft. Die Reaktionsmischung wurde anschließend eine Stunde bei 90 °C gehalten und auf Raumtemperatur abgekühlt. Man erhielt eine klare, wässrige 60 Gew-%ige Lösung des Produkts in Wasser. Das Wasser kann durch Destillation aus dem Reaktionsprodukt entfernt werden.

### Beispiel 5:

### Umsetzung eines polyethylenoxid-/polypropylenoxid- Siliconpolyethers mit Natrium-4-vinylbenzolsulfonat unter Verwendung von 2,2'-Azobis(2-amidinopropan)dihydrochlorid als Initiator

100 g Siliconpolyether (Tegopren^{®} 5842, Handelsname der Goldschmidt GmbH CAS-Nr.: 68937-54-2) wurden in einem Fünfhalskolben ausgestattet mit Rührer, Intensivkühler, Thermometer und zwei Tropftrichtern unter Stickstoffatmosphäre auf 85 °C aufgeheizt. 5 g Natrium-4-vinylbenzolsulfonat (Hersteller: Tosoh Organic Chemical Co.) wurden unter leichtem Erwärmen in 35 g Wasser gelöst. 3,15 g 2,2'-Azobis(2-amidinopropan)-dihydrochlorid (Handelsname: V-50 der Wako Pure Chemical Industries, Ltd.) wurden in 35 g Wasser gelöst. Beide Lösungen wurden gleichzeitig aber getrennt bei 85 °C innerhalb von 90 Minuten zum vorgelegten Siliconpolyether zugetropft. Die Reaktionsmischung wurde anschließend eine Stunde bei 95 °C gehalten und auf Raumtemperatur abgekühlt. Man erhielt eine klare wässrige 60 Gew.-%ige Lösung des Produkts. Das Wasser kann durch Destillation aus dem Reaktionsprodukt entfernt werden.

### Beispiel 6:

### Umsetzung eines polyethylenoxid-/polypropylenoxid- Siliconpolyethers ohne freie OH-Gruppen mit Natrium-4-vinylbenzolsulfonat unter Verwendung von 2,2'-Azobis(2-amidinopropan)dihydrochlorid als Initiator.

100 g Siliconpolyether (Tegostab^{®} B-8407, Siliconpolyether ohne freie OH-Gruppen, Handelsname der Goldschmidt GmbH, CAS-Nr.: 67762-85-0) wurden in einem Fünfhalskolben, ausgestattet mit Rührer, Intensivkühler, Thermometer und zwei Tropftrichtern, unter Stickstoffatmosphäre auf 85 °C aufgeheizt. 10 g Natrium-4-vinylbenzolsulfonat (Hersteller: Tosoh Organic Chemical Co.) wurden unter leichtem Erwärmen in 100 g Wasser gelöst. 3,15 g 2,2'-Azobis(2-amidinopropan)-dihydrochlorid (Handelsname: V-50 der Wako Pure Chemical Industries, Ltd.) wurden in 35 g Wasser gelöst. Beide Lösungen wurden gleichzeitig aber getrennt bei 85 °C innerhalb von 120 Minuten zum vorgelegten Siliconpolyether zugetropft. Die Reaktionsmischung wurde anschließend eine Stunde bei 95 °C gehalten und auf Raumtemperatur abgekühlt. Man erhält eine klare 45 Gew-%ige Lösung des Produktes in Wasser. Das Wasser kann durch Destillation aus dem Reaktionsprodukt entfernt werden.

### Beispiel 7:

### Umsetzung eines polyethylenoxid-/polypropylenoxid-haltigen Siliconpolyethers ohne freie OH-Gruppen mit Natrium-4-vinylbenzolsulfonat unter Verwendung von Kaliumperoxodisulfat als Initiator

100 g Siliconpolyether (Tegostab B-8407, Siliconpolyether ohne freie OH-Gruppen, Handelsname der Goldschmidt GmbH, CAS-Nr.: 67762-85-0) wurden in einem Vierhalskolben, ausgestattet mit Rührer, Intensivkühler, Thermometer und Tropftrichter unter Stickstoffatmosphäre, auf 80 °C aufgeheizt. 3,3 g Kaliumperoxodisulfat(bezogen von Sigma-Aldrich) und 10 g Natrium-4-vinylbenzolsulfonat (Hersteller: Tosoh Organic Chemical Co.) wurden unter leichtem Erwärmen in 100 g Wasser gelöst. Die Lösung wurde auf 80 °C temperiert und innerhalb von 120 Minuten bei 80 °C zum vorgelegten Siliconpolyether zugetropft. Die Reaktionsmischung wurde anschließend eine Stunde bei 90 °C gehalten und auf Raumtemperatur abgekühlt. Man erhält eine klare 53 Gew.-%ige Lösung des Produktes in Wasser. Das Wasser kann durch Destillation aus dem Reaktionsprodukt entfernt werden.

### Beispiel 8:

### Herstellung eines Allypolyethers (MW = 400, 100 % Ethylenoxid-Anteil)

58 g Allylalkohol (bezogen von Sigma-Aldrich) und 1,13 g KOH wurden in einem Druckreaktor vorgelegt und auf 115 °C aufgeheizt. Anschließend wurden 352 g Ethylenoxid über mehrere Stunden bei einem maximalen Druck von 4 bar zudosiert. Nach einer Nachreaktionszeit von 2 h wurde auf 80 °C abgekühlt. Das Reaktionsgemisch wurde mit einer 65 Gew.-%igen, wässrigen Phosphorsäure neutralisiert und abgefüllt.

### Beispiel 9:

### Hydrosiliylierung eines Allylpolyethers mit einem Wasserstoffsiloxan

40 g des Allylpolyethers aus Beispiel 8 wurden in einem Vierhalskolben, ausgestattet mit Rührer, Intensivkühler, Thermometer und Tropftrichter unter Stickstoffatmosphäre vorgelegt und auf 70 °C erhitzt. Anschließend erfolgte die Zugabe von 10 ppm des Karstedt Katalysators (Platin-Divinyltetramethyldisiloxan-Komplex der Firma ABCR). Bei 70 °C wurden innerhalb von zwei Stunden 223 g 1,1,1,3,5,5,5-Heptamethyltrisiloxan (Gelest) zugetropft. Nach Beendigung der Zugabe wurde noch 2 h bei 70 °C nachgerührt. Anschließend wurde abgekühlt und das klare Produkt abgefüllt.

### Beispiel 10:

### Umsetzung des polyethylenoxidhaltigen Siliconpolyethers aus Beispiel 9 mit Natrium-4-vinylbenzolsulfonat unter Verwendung von Kaliumperoxodisulfat als Initiator

100 g des Polyethersiloxans aus Beispiel 9 wurden in einem Vierhalskolben, ausgestattet mit Rührer, Intensivkühler, Thermometer und Tropftrichter unter Stickstoffatmosphäre, auf 80 °C aufgeheizt. 3,3 g Kaliumperoxodisulfat(bezogen von Sigma-Aldrich) und 10 g Natrium-4-vinylbenzolsulfonat (Hersteller: Tosoh Organic Chemical Co.) wurden unter leichtem Erwärmen in 100 g Wasser gelöst. Die Lösung wurde auf 80 °C temperiert und innerhalb von 120 Minuten bei 80 °C zum vorgelegten Siliconpolyether zugetropft. Die Reaktionsmischung wurde anschließend eine Stunde bei 90 °C gehalten und auf Raumtemperatur abgekühlt. Man erhält eine klare 53 Gew.-%ige Lösung des Produktes in Wasser. Das Wasser kann durch Destillation aus dem Reaktionsprodukt entfernt werden.

### Beispiel 11:

### Radikalische Umsetzung eines Allypolyethers mit Natrium-4-vinylbenzolsulfonat unter Verwendung von Kaliumperoxodisulfat als Initiator

64 g des Allylpolyethers aus Beispiel 8 wurden in einem Vierhalskolben, ausgestattet mit Rührer, Intensivkühler, Thermometer und Tropftrichter unter Stickstoffatmosphäre, auf 80 °C aufgeheizt. 2,5 g Kaliumperoxodisulfat (bezogen von Sigma-Aldrich) und 10 g Natrium-4-vinylbenzolsulfonat (Hersteller: Tosoh Organic Chemical Co.) wurden unter leichtem Erwärmen in jeweils in 50 g Wasser gelöst. Die beiden Lösungen wurden auf 80 °C temperiert, vereinigt und innerhalb von 120 Minuten bei 80 °C zum vorgelegten Siliconpolyether zugetropft. Die Reaktionsmischung wurde anschließend eine Stunde bei 90 °C gehalten und auf Raumtemperatur abgekühlt. Man erhält eine klare 42,5 Gew.-%ige Lösung des Produktes in Wasser.

### Beispiel 12:

### Hydrosiliylierung eines gepfropften Allylpolyethers mit einem Wasserstoffsiloxan

Zu der Lösung des gepfropften Allylpolyethers aus Beispiel 11 wurden in einem Vierhalskolben, ausgestattet mit Rührer, Intensivkühler, Thermometer und Tropftrichter unter Stickstoffatmosphäre vorgelegt und auf 70 °C erhitzt. Anschließend erfolgte die Zugabe von 10 ppm Karstedt Katalysator. Bei 70 °C wurden innerhalb von einer Stunde 22,3 g Heptamethyldisiloxan zugetropft. Nach Beendigung der Zugabe wurde noch zwei Stunden bei 70 °C nachgerührt. Anschließend wurden nochmals 10 ppm Kartstedt Katalysators zugegeben und einen weitere Stunde bei 70 °C gerührt. Anschließend wurde abgekühlt und die wässrige klare Produktlösung abgefüllt.

### Beispiele 13 bis 22:

### Verwendung der Pfropfmischpolymere zur Erzeugung von Löschschaum und Vergleich mit bekanntem Tensid zur Erzeugung von Löschschaum

Das Vermögen der in den Beispielen 1 bis 7, 10 und 12 erzeugten Pfropfmischpolymere, wässrige Schäume zu erzeugen, wurde durch Ermittlung der Verschäumungszahl geprüft. Die Verschäumungszahl ist das Verhältnis des Volumens des fertigen Schaums zum Volumen des Wasser-Schaummittel-Gemisches. Eine ausführliche Beschreibung dieser Kenngröße findet sich zum Beispiel in G. Rodewald, A. Rempe: "Feuerlöschmittel. Eigenschaften - Wirkung - Anwendung"; Kohlhammer Verlag, Stuttgart, 2005. Bei der Durchführung des Tests wurde ein Rührmischwerk der Firma Braun (Typus:
Power Blend MX 2050) verwendet.

Es wurden 100 ml einer Lösung von 0,45 Gew.-% der in den Beispielen 1 bis 7, 10 und 12 erhaltenen siliziumorganischen Pfropfmischpolymeren und 1,0 Gew.-% des Schaumhilfsmittels Butyldiglykol in Leitungswasser von ca. 10° deutscher Härte 30 s lang verschäumt und das Volumen des gebildeten Schaums in einem Messzylinder ermittelt. Die erhaltenen Ergebnisse sind in der Tabelle 1 zusammengefasst, wobei unter 50 %-Drainagezeit (DZ) die Zeit verstanden wird, die bis zur Rückbildung der Hälfte an Flüssigkeit verstreicht.

Frischer, auf diese Weise erzeugter Schaum wurde außerdem zur Löschung von n-Heptanbränden nach der in der Offenlegungsschrift DE-1 812 531 beschriebenen Methode benutzt. Es ist dem Fachmann geläufig, dass n-Heptan als definierte Modellsubstanz für Treibstoff, insbesondere für Benzin, verwendet wird. Dazu wurde analog der Offenlegungsschrift DE-2 240 263 ein Metalltrichter mit einer Trichteröffnung von 18 mm mit der Öffnung über einer Metallschale von 16 cm Durchmesser angeordnet, die 100 g n-Heptan enthielt. Das n-Heptan wurde angezündet und nach einer Vorbrennzeit von 20 s wurde mit dem Löschen durch Gießen des unmittelbar zuvor erzeugten Schaums in den Trichter begonnen.

Die Ergebnisse sind in der Tabelle 1 dargestellt, wobei jeweils die Zeit in Sekunden bis zur vollständigen Löschung angegeben ist.

**Tabelle 1:**

| Ergebnisse aus den Beispielen 13 bis 22 | | | | | | |
|---|---|---|---|---|---|---|
| Bsp. | Formulierung in Wasser | | Schaumeigenschaften | | | |
| | Pfropfmischpolymer (0,45 Gew.-%) | Butyldiglykol % | Verschäumungszahl | DZ (min) | Löschzeit (s) | Erfindungs -gemäß |
| 13 | aus Bsp. 1 | 1 | 2,6 | 3,5 | 17 | ja |
| 14 | aus Bsp. 2 | 1 | 2,5 | 3,1 | 19 | ja |
| 15 | aus Bsp. 3 | 1 | 2,3 | 2,9 | 21 | ja |
| 16 | aus Bsp. 4 | 1 | 2,5 | 2,4 | 29 | ja |
| 17 | aus Bsp. 5 | 1 | 2,4 | 2,3 | 23 | ja |
| 18 | aus Bsp. 6 | 1 | 2,3 | 3,3 | 20 | ja |
| 19 | aus Bsp. 7 | 1 | 2,4 | 3,2 | 19 | ja |
| 20 | aus Bsp. 10 | 1 | 2,9 | 4,0 | 19 | ja |
| 21 | aus Bsp. 12 | 1 | 2,9 | 3,9 | 19 | ja |
| 22 | Texapon NSO | 1 | 6,0 | 6,5 | 34 | nein |

| | | | | | | |
|---|---|---|---|---|---|---|
| Texapon NSO ist eine 27 %ige wässrige Natriumlaurylethersulfat-Lösung [C₁₂H₂₅-O-[(CH₂)ₛ-O] ᵥ-SO₃] Na der Fa. Cognis. DZ = 50 %-Drainagezeit | | | | | | |

Aus den Beispielen 13 bis 22, mit den bewusst einfach gewählten Formulierungen geht hervor, dass die aus den erfindungsgemäßen Verbindungen erhaltenen Schäume zum Löschen von Treib- und Heizstoffen geeignet sind. Insbesondere die Formulierungen mit den aus Beispielen 1 und 2 sowie 10 und 12 erhaltenen Pfropfmischpolymeren als Tenside (Beispiele 13, 14, 20 und 21 aus Tabelle 1) sind Formulierungen mit siliconfreien Tensiden (Beispiel 22 in Tabelle 1) deutlich überlegen.

### Beispiele 23 bis 32:

### Vergleich der Schaumstabilität

Die Stabilität der aus den erfindungsgemäßen Verbindungen erzeugten wässrigen Schäume an hydrophoben Flüssigkeiten, wie sie in Anlagen wie Tanklagern, Rohren, Pipelines oder Kesseln, bei der Verringerung von Verdampfungsverlusten flüchtiger Kohlenwasserstoffe oder anderer organischer Lösemitteln, und bei der Verhinderung des Entstehens von Bränden angetroffen werden, wurde auf n-Heptan geprüft. Dazu wurden 15 ml n-Heptan in einer Petrischale (12 x 1 cm) vorgelegt und mit Schaum belegt, der aus jeweils 7,5 g einer 1 Gew.-%igen wässrigen Tensidlösung (Lösung der siliziumorganischen Pfropfmischpolymeren erhalten gemäß Beispiel 1 bis 7 und 10 bis 12) durch Verschäumung in einem Elegant Foamer Line M3 Schaumspender der Fa. Rexam Airspray gewonnen wurde. Es wurde die Zeit gemessen, die bis zur Halbierung der ursprünglich belegten Schaumfläche vergangen ist (HWZ 50). Die erhaltenen Ergebnisse sind in der Tabelle 2 zusammengefasst.

**Tabelle 2:**

| Ergebnisse aus den Beispielen 23 bis 31 | | | |
|---|---|---|---|
| Beispiel | Pfropfmischpolymer (1,0 Gew.-%) | HWZ 50 | Erfindungsgemäß |
| 23 | aus Beispiel 1 | 20 min | ja |
| 24 | aus Beispiel 2 | 15 min | ja |
| 25 | aus Beispiel 3 | 13 min | ja |
| 26 | aus Beispiel 4 | 9 min | ja |
| 27 | aus Beispiel 5 | 14 min | ja |
| 28 | aus Beispiel 6 | 12 min | ja |
| 29 | aus Beispiel 7 | 13 min | ja |
| 30 | aus Beispiel 10 | 15 min | ja |
| 31 | aus Beispiel 12 | 15 min | ja |
| 32 | Texapon NSO | 7 min | nein |

Die Ergebnisse der Tabelle 2 zeigen, dass die erfindungsgemäß eingesetzten Pfropfmischpolymere wesentlich stabilere Schäume auf n-Heptan als rein organische Tenside (Beispiel 32 in Tabelle 2) ergeben und damit für die Erzeugung von wässrigen Schäumen an hydrophoben Flüssigkeiten, wie sie in Anlagen wie Tanklagern, Rohren, Pipelines oder Kesseln, bei der Verringerung von Verdampfungsverlusten flüchtiger Kohlenwasserstoffe oder anderer organischer Lösemitteln, und bei der Verhinderung des Entstehens von Bränden angetroffen werden, geeignet sind.

## Patentansprüche

1. Zusammensetzung zur Erzeugung von wässrigem Schaum enthaltend siliziumorganische Pfropfmischpolymere, **dadurch gekennzeichnet, dass** die Zusammensetzung siliziumorganische Pfropfmischpolymere aufweist, die erhältlich sind durch ein Verfahren umfassend einen Hydrosilylierungsschritt
a) bei dem ein Alkenylpolyether mit einem Wasserstoffsiloxan umgesetzt wird, und einen radikalischen Pfropfungsschritt
b) in Gegenwart eines freie Radikale entwickelnden Mittels, bei dem mindestens ein ethylenisch ungesättigtes Monomer an eine, eine Polyethergruppe aufweisende Verbindung, gepfropft wird, wobei die Monomeren mindestens eine anionische Funktionalität enthalten, ausgewählt aus der Gruppe der Sulfonate und/oder Sulfate und/oder Phosphate und/oder Phosphonate, die Reihenfolge der Durchführung der beiden Verfahrensschritte beliebig ist und jeweils das Produkt der Reaktion des ersten Verfahrensschrittes als Edukt im nachfolgenden Schritt eingesetzt wird.

2. Zusammensetzung nach Anspruch 1, **dadurch gekennzeichnet, dass** die ethylenisch ungesättigten Monomere ausgewählt sind aus der Gruppe enthaltend sulfonierte Styrolderivate, sulfonierte Acrylate, sulfonierte Methacrylate und Mischungen daraus.

3. Zusammensetzung nach Anspruch 1 oder 2, **dadurch gekennzeichnet, dass** die ethylenisch ungesättigten Monomere ausgewählt sind aus der Gruppe enthaltend Alkalistyrol-4-sulfonate, Alkali-3-(sulfopropyl)methacrylate, Alkali-3-(sulfopropyl)-acrylate und Mischungen daraus.

4. Zusammensetzung nach einem der Ansprüche 1 bis 3, **dadurch gekennzeichnet, dass** als Alkenylpolyether im Hydrosilylierungsschritt a) oder als Polyethergruppe aufweisende Verbindung im Pfropfungsschritt b) ein Alkenylpolyether ausgewählt aus Alkenylpolyethern der Formel (II)
CH₂=CR³-L- (C₂H₄O) ₙ (C₃H₆O) ₚ (C₁₂H₂₄O) _{q} (C₈H₈Oᵣ) Z (II)
wobei
R³ H oder Methyl ist,
L ein zweiwertiger gegebenenfalls verzweigter Kohlenwasserstoffrest mit 1 bis 18 C-Atomen, vorzugsweise 1 bis 4 C-Atomen und bevorzugt einem C-Atom ist,
Z ein H-Atom oder ein einwertiger linearer oder verzweigter organischer Rest wie Alkyl, Aryl, Alkylaryl, Arylalky oder Acetoxy, die Indices
n, p, q und r voneinander unabhängige ganze Zahlen von 0 bis 100 sind, die Summe aus n, p, q und r ≥ 1 und falls mehr als einer der Indices n, p, q, r > 0 ist, die allgemeine Formel (II) ein statistisches Oligomer oder ein Blockoligomer sein kann, eingesetzt wird.

5. Zusammensetzung nach einem der Ansprüche 1 bis 4, **dadurch gekennzeichnet, dass** als Siloxan im Hydrosilylierungsschritt a) ein Siloxan eingesetzt wird, welches ausgewählt ist aus Siloxanen der Formel (III), 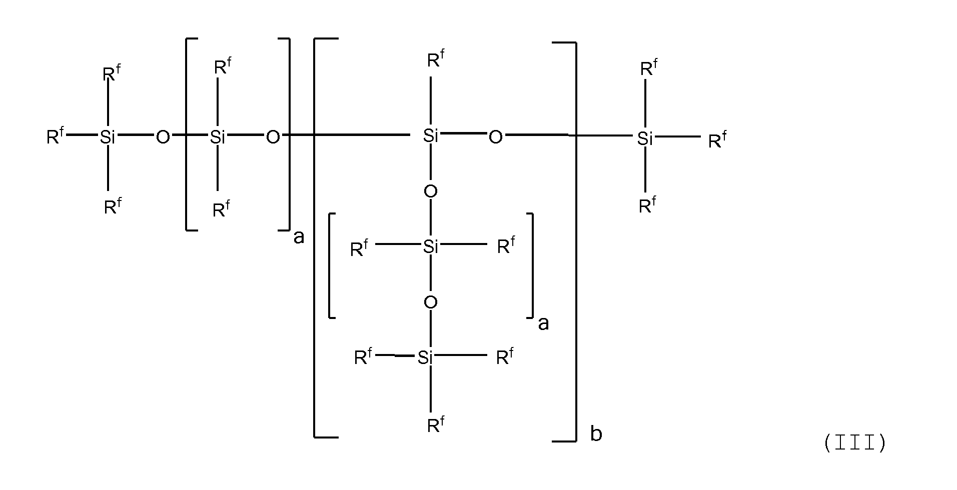 mit
b eine Zahl von 0 bis 10,
a eine Zahl von 1 bis 500,
R^{f} gleiche oder verschiedene Reste R¹ oder R², mit der Maßgabe, dass mindestens ein Rest R^{f} ein Rest R² ist,
R¹ Alkylreste mit 1 bis 16 C-Atomen oder ein Arylrest, wobei die Reste R¹ substituiert oder unsubstituiert sein können und
R² Wasserstoff.

6. Zusammensetzung nach zumindest einem der Ansprüche 1 bis 5, **dadurch gekennzeichnet, dass** die siliziumorganischen Pfropfmischpolymere erhältlich sind durch ein Verfahren, bei dem zunächst der Hydrosilylierungsschritt a) unter Erhalt eines Polyethersiloxans durchgeführt wird und dieses Polyethersiloxan anschließend in dem radikalischen Pfropfungssschritt b) mit mindestens einem ethylenisch ungesättigten Monomeren, welches mindestens eine anionische Funktionalität, ausgewählt aus der Gruppe der Sulfonate, Sulfate, Phosphate und/oder Phosphonate, aufweist, umgesetzt wird.

7. Zusammensetzung nach Anspruch 6, **dadurch gekennzeichnet, dass** in Verfahrensschritt a) ein Polyethersiloxan erhalten wird, welches ausgewählt ist aus Polyethersiloxanen der Formel (IV), 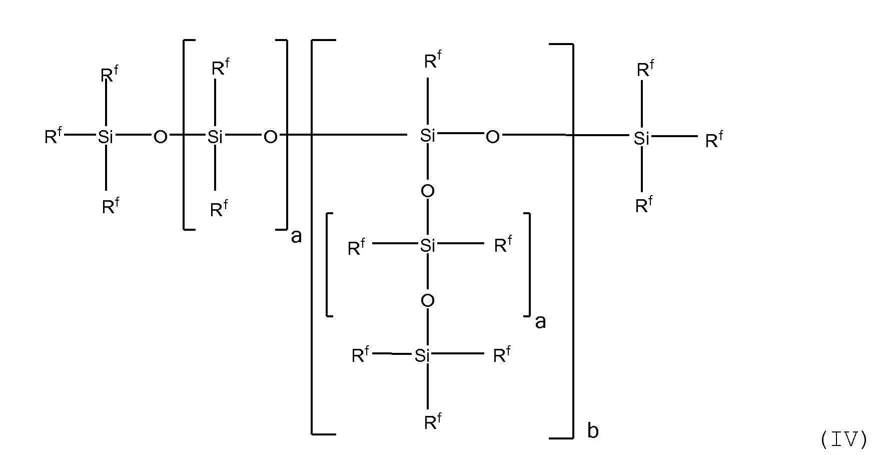 mit
b eine Zahl von 0 bis 10,
a eine Zahl von 1 bis 500,
R^{f} gleiche oder verschiedene Reste R¹ oder R², mit der Maßgabe, dass mindestens ein Rest R^{f} ein Rest R² ist,
R¹ Alkylreste mit 1 bis 16 C-Atomen oder ein Arylrest, wobei die Reste R¹ substituiert oder unsubstituiert sein können,
R² ein Polyetherrest der allgemeinen Formel (V)
- Y (C₂H₄O) ₙ (C₃H₆O) p (C₁₂H₂₄O) _{q} (C₈H₈Oᵣ) Z (V)
wobei
Y ein zweiwertiger gegebenenfalls verzweigter Kohlenwasserstoffrest mit 1 bis 20 C-Atomen ist,
Z ein H-Atom oder ein einwertiger linearer oder verzweigter organischer Rest wie Alkyl, Aryl, Alkylaryl, Arylalky oder Acetoxy ist, die Indices
n, p, q und r voneinander unabhängige ganze Zahlen von 0 bis 100 sind, wobei die Summe aus n, p, q und r ≥ 1 ist und falls mehr als einer der Indices n, p, q, r > 0 ist, die allgemeine Formel (V) ein statistisches Oligomer oder ein Blockoligomer sein kann.

8. Zusammensetzung nach Anspruch 6 oder 7, **dadurch gekennzeichnet, dass** das Massenverhältnis von radikalisch umzusetzenden Monomeren zu Polyethersiloxan im Pfropfungsschritt b) von 0,02 zu 1 bis 5 zu 1 beträgt.

9. Zusammensetzung nach zumindest einem der Ansprüche 1 bis 5, **dadurch gekennzeichnet, dass** die siliziumorganischen Pfropfmischpolymere erhältlich sind durch ein Verfahren, bei dem zunächst in einem radikalischen Pfropfungsschritt b) ein Alkenylpolyether als Polyethergruppe aufweisende Verbindung mit mindestens einem ethylenisch ungesättigten Monomeren, welches mindestens eine anionische Funktionalität, ausgewählt aus der Gruppe der Sulfonate, Sulfate, Phosphate und/oder Phosphonate, aufweist, umgesetzt wird und anschließend der in Verfahrensschritt b) erhaltene gepfropfte Alkenylpolyether in einem Hydrosilylierungsschritt a) mit Wasserstoffsiloxanen umgesetzt wird.

10. Zusammensetzung nach Anspruch 9, **dadurch gekennzeichnet, dass** das Massenverhältnis von radikalisch umzusetzenden Monomeren zu Alkenylpolyether im Pfropfungsschritt von 0,02 zu 1 bis 5 zu 1 beträgt.

11. Verwendung einer Zusammensetzung gemäß zumindest einem der vorangegangenen Ansprüche zur Erzeugung von wässrigem Schaum.

12. Verwendung nach Anspruch 11, **dadurch gekennzeichnet, dass** als wässriger Schaum ein Feuerlöschschaum erzeugt wird.

13. Verwendung nach Anspruch 11 oder 12, **dadurch gekennzeichnet, dass** der Zusammensetzung Tenside mit perfluorierten Gruppen zugesetzt werden, wobei der Gesamtgehalt an Tensiden mit perfluorierten Gruppen gleich oder geringer ist als die Hälfte der zur Erzeugung eines vergleichbaren Löschschaums aus Zusammensetzungen ohne nachweisbare Mengen an den siliziumorganischen Pfropfmischpolymeren, erforderlichen Konzentration an Tensiden mit perfluorierten Gruppen.

14. Verwendung nach zumindest einem der Ansprüche 11 bis 13, **dadurch gekennzeichnet, dass** der Schaum auf der Oberfläche einer Flüssigkeit, vorzugsweise einer hydrophoben Flüssigkeit erzeugt wird.

15. Verwendung nach zumindest einem der Ansprüche 11 bis 14, **dadurch gekennzeichnet, dass** ein Schaum zur Reinigung von Anlagen oder Apparaturen, zur Verringerung von Verdampfungsverlusten und zur Verhinderung des Entstehens von Bränden erzeugt wird.
